# EUROPEAN PATENT APPLICATION

(11) **EP 4 510 037 A1**
(43) Date of publication of application: **19.02.2025**
(21) Application number: 23315321.2
(22) Date of filing: 17.08.2023
(51) Int. Cl.: G06K 19/07

(54) **1-TO-N WIRE INLAY CONNECTIONS**

(71) Applicant: THALES DIS FRANCE SAS, 92190 Meudon (FR)
(72) Inventor: Robles, Laurence, 83640 Saint Zacharie (FR); Bajolle, Antoine, 597151 Singapore (SG); Leloup, Laurent, 13124 Peypin (FR)
(74) Representative: Castelo, Jérôme

(57) **Abstract**

A data carrier (1), in particular a smart card, comprises a first electronic module (2) being associated with first contact elements (3, 3a, ...) and a second electronic module (4) being associated with second contact elements (5, 5a, ...). At least one or exactly one first contact element (3) being associated with the first electronic module (2) is in electrical connection with at least two or exactly two second contact elements (5b, 5c) being associated with the second electronic module (4).

## Description

### TECHNICAL FIELD

The present invention relates to a data carrier according to claim 1 and to a method of producing such a data carrier according to claim 15.

### PRIOR ART

Data carriers such as smart cards are well-known in the art. Using only inlay wires to connect a Secure Element connected to the ISO metallic plate, to another element of the smart card which is not connected to the ISO metallic plate (e.g. a Biometric Sensor) is possible using only wire inlays (similar technology used to design Smart card antenna), using "zigzag" landing pads in order to ensure a reliable connection despite the tolerance of the inlay placement within the smart card (due to lamination/singulation process).

But for some designs, two (or more) pads on one side need to be connected to only one pad on the other side. Being able to do so while ensuring a reliable connection of both pads reveals to be a challenge due to placement tolerance of the inlay.

### SUMMARY OF THE INVENTION

It is an object of the present invention to provide a data carrier having an improved electrical connection.

This object is achieved with a data carrier according to claim 1. That is, a data carrier, in particular a smart card, is provided, wherein the data carrier comprises a first electronic module being associated with first contact elements and a second electronic module being associated with second contact elements. At least one or exactly one first contact element being associated with the first electronic module is in electrical connection with at least two or exactly two second contact elements being associated with the second electronic module.

The data carrier according to the invention can be a smart card such as a contact and/or contactless smartcard or a hybrid card, etc., that comprises electronic modules that determine the capabilities and thus the field of application of the data carrier. Examples of smart cards are credit cards, ATM cards, SIM cards, etc. In fact, a variety of different form factors are conceivable, wherein the data carrier is a tag, a sticker, a key fob, etc.

The data carrier according to the invention is based on the insight that at least two electronic modules can be electrically connected to one another, wherein at least one contact element associated with one of the electronic modules is in connection with at least two contact elements associated with the other electronic module.

For instance, exactly one contact element associated with one of the electronic modules can be in electrical connection with exactly two contact elements associated with the other electronic modules. However, other connections are likewise conceivable, for example, one contact element associated with one of the electronic modules that is in electrical connection with three contact elements associated with the other electronic module, etc.

Hence, important to note is the fact that in the present invention there is not a "one-to-one" connection between at least some of the contact elements of the electronic modules with one another but that there is at least one "one-to-n" connection between the contact elements of the electronic modules, i.e. that at least one of the contact elements associated with one of the electronic modules is in connection with more than one contact elements, here symbolically represented as "n", associated with the other electronic module.

It should furthermore be noted that there can be at least one and thus exactly one such "one-to-n" connection or that there are two or more such "one-to-n" connections. For instance, there can be two such "one-to-n" connections, wherein a first contact element associated with the first electronic module is in connection with two second contact elements associated with the second electronic module, and a further first contact element associated with the first electronic module is in connection with two further second contact elements associated with the second electronic module, etc.

Statements regarding one such "one-to-n" connection preferably likewise apply to two or more such "one-to-n" connections.

The first and second contact elements being associated with the first and second electronic modules, respectively, are preferably configured for specific signals as they are known in the art and/or are standardized. For instance, these contact elements can be standardized according to ISO 7816-2 and can be denoted C1 to C8. As such, the contact elements are preferably assigned to specific signals such as contact element C1 receiving a supply voltage Vcc, contact element C2 carrying the signal RST for initialisation, contact element C3 corresponding to a clock signal CLK, contact element C4 corresponding to a data signal D+ for USB communication, but may be used other than for USB, contact element C5 receiving a ground voltage GND, contact element C6 being designed to receive a voltage VPP for programming a memory card, contact element C7 corresponding to an I/O signal for data exchange, contact element C8 corresponding to the data signal D- for USB communication, but may be used other than for USB.

It should be noted that this is an example only and that the first and second contact elements can be standardized according to other standards as they are well-known in the art and depending on the intended applications of the data carrier. For example, in the event of the data carrier being a biometric card, one of the contact elements (CS_N, aka SS for SPI communication) of a fingerprint sensor could be connected to the Ground, wherein two contacts of the sensor (GND and CS_N) could be connected to one contact of the SE (GND).

The first and second contact elements being associated with the first and second electronic modules means that these contact elements are preferably in connection with the respective electronic module. For instance, the first (second) electronic module can be attached to the first (second) contact elements via a conductive material such as solder paste or silver glue and/or by an anisotropic connection film (ACF) or paste (ACP) as it is known in the art.

It is furthermore preferred that the first and second contact elements are electrical contact elements made from an electrically conducting material, see also further below.

The first contact element and/or the second contact elements are preferably formed from at least one electrically conducting element, in particular from an electrically conducting wire.

The second contact elements are preferably arranged neighbouring on the second electronic module.

That is, the first contact element being associated with the first electronic module and being in electrical connection with the two second contact elements being associated with the second electronic module is preferably formed from at least one electrically conducting element.

Likewise, said second contact elements are preferably formed from at least one electrically conducting element as well.

Said electrically conducting element preferably is an electrically conducting wire such as a copper wire. Other materials are of course likewise conceivable.

A diameter of the wire such as the copper wire can be in the range of 50 micrometer to 150 micrometer such as about 110 micrometer, although other diameters are likewise conceivable.

Moreover, not only these first and second contact elements, i.e. those participating in the "one-to-n" connection, can be formed from at least one electrically conducting element but also the other first and second contact elements of the first and second electronic modules can be formed from such electrically conducting element(s).

That is, it is conceivable that a plurality, for instance all of the first and second contact elements of the first and second electronic modules are formed from electrically conducting elements such as wires.

Additionally or alternatively, the second contact elements being associated with the second electronic module and being in electrical connection with the first contact element being associated with the first electronic module, i.e. the second contact elements participating in the "one-to-n" connection, are preferably arranged neighbouring on the second electronic module.

For instance, two contact elements of a Fingerprint Sensor could be connected to a unique contact element on a ISO module. As an example, a CS_n (aka SS) and GND of the fingerprint sensor could be connected to GND of the ISO plate.

The first contact element and the second contact elements can be in electrical connection with one another via a single electrically conducting element.

That is, in a first aspect, it is preferred that the first contact element associated with the first electronic module is in electrical connection with the second contact elements associated with the second electronic module via a single electrically conducting element, in particular via a single wire. That is, the "one-to-n" connection can be established via a single electrically conducting element.

To this end it is furthermore preferred that said single electrically conducting element, in particular wire, not only electrically connects the said first contact element with the said second contact elements but also forms the said first contact element and the said second contact elements.

The first contact element is preferably formed from a first end region of the electrically conducting element and the second contact elements are formed from a second end region of the electrically conducting element.

That is, the electrically conducting element, in particular the wire, preferably terminates in two end regions, herein called the first end region and the second end region, and wherein said end regions preferably form the said first contact element and second contact elements.

The first contact element, in particular the first end region, preferably has a zigzag shape, and/or an overall shape of the second contact elements, in particular the second end region, preferably is an L-shape.

The said first contact element, in particular the first end region, preferably has a zigzag shape as it is commonly known in the art. The zigzag shape can also be seen as a meander shape that can be formed by lining up loops of the first end region along a longitudinal direction of the first contact element.

An overall shape of the second contact elements is understood as the overall shape resulting from the individual second contact elements participating in the "one-to-n" connection.

Said overall shape preferably is an L-shape.

That is, the second end region of the electrically conducting element, in particular of the wire, that forms the second contact elements of said "one-to-n" connection is preferably laid so as to form an L-shape.

This L-shape is preferably not formed from two contact elements comprising in each case a zigzag-shape and wherein said zigzag-shaped contact elements are combined so as to form an overall L-shape. Rather, it is preferred that this L-shape is a continuous shape. That is, it is particularly preferred that the L-shape is formed by loops of the second end region, which run from an intended location of one of the second contact elements to an intended location of the other of the second contact elements, then back to the intended location of the said one of the contact elements, then again to the intended location of the other of the second contact element, etc. Hence, in a sense, this overall or continuous L-shape can be understood as an originally single contact element comprising loops extending along a longitudinal direction of the contact element, as it is the case in a zigzag contact element known in the art, but wherein these loops are then bent into an L-shape. The overall or continuous L-shape preferably has a surface area which is larger, in particular twice as large, as the surface area of a single zigzag contact element known in the art.

The first contact element and the second contact elements can be in electrical connection with one another via at least two or exactly two electrically conducting elements.

That is, in further aspects, the first contact element and the second contact elements participating in the "one-to-n" connection can be in electrical connection with one another via at least two or exactly two electrically conducting elements. For example, two electrically conducting wires can be provided that connect the two second contact elements associated with the second electronic module with the one first contact element associated with the first electronic module, see also below.

The first contact element is preferably formed from a first end region of one of the electrically conducting elements and from a first end region of the other electrically conducting element, and wherein the first end regions are preferably at least partially interlaced with respect to a longitudinal direction of the first contact element.

As mentioned earlier, two electrically conducting elements such as two wires can be provided in order to connect two of the second contact elements associated with the second electronic module with one of the first contact elements associated with the first electronic module.

Said wires preferably comprise first and second end regions as mentioned.

To this end, it is particularly preferred that the first contact element is formed from the first end regions of both electrically conducting elements such as two wires.

Said first end regions are preferably at least partially interlaced with respect to a longitudinal direction of the first contact element.

The first end regions in each case can have an identical shape and/or a zigzag shape, and/or wherein an extension of the first end regions along a transversal direction (i.e. x-direction) running perpendicularly to the longitudinal direction is in each case the same and/or remains constant when seen along the longitudinal direction of the first contact element.

Hence, in a second aspect the first end regions forming the first contact element associated with the first electronic module are preferably at least partially and particularly preferably entirely interlaced with respect to the longitudinal direction of the first contact element.

It is furthermore preferred that the first end regions have an identical shape such as an identical zigzag shape extending along the longitudinal direction of the first contact element. The zigzag-shape is preferably provided by loops of the first end region extending along the longitudinal direction of the first contact element and interlaced loops of the other first end region extending along the longitudinal direction of the first contact element. These loops are preferably lined up in a same direction. It is furthermore preferred that a pitch between successive loops of the first end region and a pitch between successive loops of the other first end region along the longitudinal direction remains the same and/or is the same, i.e. the two end regions preferably comprise the same pitches. Different pitches are conceivable, for instance 0.3 millimeter or more, such as 0.5 millimeter.

It is thus preferred that the first contact element comprises an overall extension along the transversal direction when seen along the longitudinal direction that is constant. In other words, an overall size of the first contact element along the transversal direction and when seen along the longitudinal direction preferably remains the same.

The first end regions can have different shapes, and/or the first end regions can have an extension along a transversal direction (i.e. x-direction) running perpendicularly to the longitudinal direction of the first contact element being different from one another and/or that varies when seen along the longitudinal direction of the first contact element.

Hence, in a third aspect and in contrast to the second aspect the first end regions preferably have different shapes and/or different extensions along the transversal direction and/or a varying extension along the transversal direction.

Nevertheless, it is preferred that the first contact element comprises an overall extension along the transversal direction when seen along the longitudinal direction that is constant. In particular, it is preferred that the overall extension of the first contact element along the transversal direction is provided by a partial extension of one of the electrically conducting elements, now called first partial extension of the first electrically conducting element, and by a partial extension of the other electrically conducting elements, now called second partial extension of the second electrically conducting element. It is preferred that the first partial extension of the first electrically conducting element and the second partial extension of the second electrically conducting element is different with respect to the transversal direction and when seen along the longitudinal direction. For example, if one were to assign an overall extension of the first contact element along the transversal direction at a given location with respect to the longitudinal direction to be 100 %, the first partial extension could constitute 30 % and the second partial extension could constitute 70 % of said overall extension. At another location with respect to the longitudinal direction, the first partial extension could constitute 70 % and the second partial extension could constitute 30 % of said overall extension. As such, the first and second partial extensions, i.e. the extension of the first end regions, along the transverse direction can be said to vary when seen along the longitudinal direction of the first contact element. Since the sum of the first and second partial extensions remains 100 % when seen along the longitudinal direction, an overall extension of the first contact element or its size however can be said to remain constant.

To this end it is furthermore preferred that the first and second partial extensions are alternating with respect to the longitudinal direction of the first contact element. For example, when seen along the longitudinal direction of the first contact element the first partial extension could be 30 %, 70 %, 30 %, while the second partial extension at these locations could be 70 %, 30 %, 70%, etc. It should be noted that other ratios than 30:70 are likewise conceivable. In particular a ~1/3 to 2/3 ratio is preferred in order to have a connection irrespective of an "x-shift".

In this regard it is noted that the shape of the first end regions although being a varying shape along the longitudinal direction can still be the same. For example, the second electrically conducting element could have the shape of the first electrically conducting element that is merely shifted with respect to the longitudinal direction. In other words, the first end regions could be identical but arranged offset with respect to one another and when seen along the longitudinal direction of the first contact element.

Hence, the first end regions are preferably interlaced in the embodiments of the second and third aspect. However, a surface area of the first contact element in which the first end regions are arranged alternatingly and/or interlaced is preferably smaller in the embodiment according to the third aspect as compared to the embodiment according to the second aspect. But, a surface area of the first contact element is in each case preferably corresponding to the surface area of a single zigzag contact element as it is known in the art.

In any case, it is preferred that the surface areas of the first and second contact elements have a dimension ranging in the millimeter range, for instance x,y-dimensions being in the range of 3x3 millimeter to 5x5 millimeter, although other dimensions are conceivable as well. Said x,y-dimensions are preferably associated with the longitudinal and transversal directions of the contact elements mentioned above.

The second end region of one of the electrically conducting elements preferably forms one of the second contact elements and the second end region of the other of the electrically conducting elements forms the other of the second contact elements.

In both embodiments, i.e. in the second aspect and the third aspect, it is preferred that the second end regions of the two electrically conducting elements form individual second contact elements. That is, it is preferred that the second end regions are preferably not interlaced.

It is furthermore preferred that these second contact elements, in particular the second end regions of the two electrically conducting elements, have a same shape and/or a zigzag shape. In fact, it is preferred that these second contact elements have a zigzag-shape as it is known in the art.

In any case it is preferred that at least some of those contact elements of the electronic modules that are not participating in a "one-to-n" connection are connected individually to one another, for example via individual electrically conducting elements such as wires that in each case connect one of the first contact elements to one of the second contact elements.

The data carrier preferably further comprises an antenna. The antenna can be in connection with and preferably is connected to the first electronic module and/or the second electronic module. The antenna preferably at least partially and particularly preferably entirely surrounds the first and second electronic modules when seen in cross-section.

That is, the data carrier preferably further comprises at least one antenna. The antenna is preferably configured to communicate with an external device being external from the data carrier. Additionally or alternatively, the antenna is preferably configured to communicate with the first electronic module and/or the second electronic module. It is particularly preferred that the first electronic module and/or the second electronic module are configured to communicate with an external device being arranged externally from the data carrier via the at least one antenna.

The antenna preferably at least partially and particularly preferably entirely surrounds the first electronic module and the second electronic module when seen in cross-section.

The antenna preferably is a coil and/or is composed of turns and/or is made from an electrically conductive element such as a wire. The antenna preferably corresponds to an antenna as it is known in the state of the art and/or made by embedding a conductive wire in an inlay element, see further below. However, other techniques for forming the antenna on the inlay element are likewise conceivable, for instance screen printing, conductive material jet, electrodeposition technique, and etching.

To this end, it is preferred that the antenna is in connection with the first electronic module via at least one of the first contact elements being associated with the first electronic module and/or in connection with the second electronic module via at least one of the second contact elements being associated with the second electronic module. In particular, the antenna can be connected to at least one such as two of the first contact elements associated with the first electronic module.

In particular, at least one of the first contact elements and/or at least one of the second contact elements preferably provide an end region of the antenna that serves the purpose of interconnecting the antenna to the first and/or second electronic module.

As mentioned earlier, the first and/or second contact elements and thus the end region(s) of the antenna preferably have a zigzag-shape as it is commonly known in the art.

The first electronic module is preferably configured for at least one application such as a payment transaction and the second electronic module is configured to enable or prohibit the application of the first electronic module.

The second electronic module preferably is a biometric module such as a fingerprint sensor module.

The first electronic module is preferably configured for contact applications and/or contactless applications.

As mentioned earlier, the first electronic module is preferably configured to communicate with an external device, particularly preferably via the antenna.

In a preferred embodiment the first electronic module is a radio frequency module and the antenna is an RF antenna, and wherein the data carrier is configured for RF communication. The external device in this case preferably corresponds to an RFID reader such as a payment terminal. As such, the first electronic module is preferably configured for applications such as payment transactions based on RFID technology.

However, other applications of the first electronic module are likewise conceivable, such as a USB port (there are some USB keys in Smart card format) for instance (with USB reader).

The second electronic module is preferably configured to enable or prohibit an application of the first electronic module.

In particular, the second electronic module is preferably configured to identify an authorized user of the data carrier and to enable the application of the first electronic module upon an identification of the authorized user.

In other words, the second electronic module is preferably configured for authorisation and preferably comprise a bio-sensor and/or is a biometric electronic module wherein the second electronic module preferably is a biometric module such as a fingerprint sensor module, for instance the commercially available FPC 1323 Singen V1. Other bio-sensors and/or biometric modules are of course likewise conceivable, for instance an iris sensor.

Hence, a communication of the first electronic module and in particular applications such as transactions or the like are preferably dependent on a successful authorization by the second electronic module. Said authorization by the second electronic module and thus an activation of the data carrier takes place preferably via the electrical connection being established between the first and second electronic modules, in particular via the "one-ton" connection between the at least one or exactly one first contact element being associated with the first electronic module and the at least two or exactly two second contact elements being associated with the second electronic module. The second electronic module could be a screen for instance, for instance not for activating anything, but for displaying information.

The data carrier preferably further comprises an inlay element, and wherein at least one of the first electronic module, the second electronic module, the first contact elements, the second contact elements, the at least one electrically conducting element or the antenna are at least partially arranged on and/or in the inlay element.

That is, the data carrier preferably comprises at least one inlay element. The inlay element preferably comprises or consists of one or more layers of a plastic material such as a thermoplastic polymer, for example acrylonitrile butadiene styrene (ABS), polycarbonate (PC), polyethylene terephthalate (PET), polylactic acid (PLA), recycled thermoplastic polymers such as R-PVC, etc. The inlay element preferably corresponds to an inlay element as it is known in the field of smart cards.

Preferably, the first electronic module and/or the second electronic module and/or the first contact elements and/or the second contact elements and/or the at least one electrically conducting element such as the wires and/or the antenna are at least partially arranged on and/or in the inlay element.

For instance, the antenna and the contact elements can be formed according to the well-known wire embedding technology, wherein electrically conducting wires are embedded in the inlay element.

The data carrier preferably further comprises a carrier body comprising one or more layers that are arranged above one another with respect to an extension direction of the data carrier. At least one of the first electronic module, the second electronic module, the first contact elements, and the second contact elements are preferably at least partially and particularly preferably entirely arranged within the carrier body.

That is, the data carrier preferably comprises a carrier body. The first electronic module and/or the second electronic module and/or the first contact elements and/or the second contact elements and/or further components of the data carrier such as the antenna are preferably at least partially and particularly preferably entirely arranged within the carrier body. In fact, it is particularly preferred that the inlay element is at least partially and preferably entirely arranged within the carrier body. In the field of the card industry, said carrier body can be seen as a card body. The carrier body or card body preferably comprises one or more layers that are arranged above one another with respect to an extension direction of the data carrier.

The carrier body or card body preferably comprises cavities within which the first and second electronic modules are received. The cavities can be generated in a manner well-known in the art, for example by milling.

It is furthermore preferred that the carrier body or card body comprises a top layer forming a top side of the data carrier and an opposing bottom layer forming a bottom side of the data carrier. These top and bottom layers preferably comprise and/or correspond to so-called printed front and back sheets.

In another aspect, a method of manufacturing a data carrier as described above is provided, wherein the data carrier preferably is a smart card. The method comprises the steps of i) providing a first electronic module being associated with first contact elements, and ii) providing a second electronic module being associated with second contact elements. At least one or exactly one first contact element being associated with the first electronic module is in electrical connection with at least two or exactly two second contact elements being associated with the second electronic module

Any statements made herein regarding the data carrier per se preferably likewise apply to the method of manufacturing the data carrier and vice versa.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows a top view on an inlay element of a data carrier of the prior art that comprises contact elements being associated with a left electronic module and contact elements being associated with a right electronic module;
- Fig. 2a: shows an enlarged view of the contact elements being associated with the right electronic module of figure 1, wherein the right electronic module is to be connected to said contact elements;
- Fig. 2b: shows an enlarged view of the contact elements being associated with the right electronic module of figure 1, wherein the right electronic module to be connected to said contact elements is shifted along a first spatial direction;
- Fig. 2c: shows an enlarged view of the contact elements being associated with the right electronic module of figure 1, wherein the right electronic module to be connected to said contact elements is shifted along a second spatial direction;
- Fig. 3: shows a top view on an inlay element of a data carrier according to the invention, wherein contact elements being associated with a left electronic module and contact elements being associated with a right electronic module are in connection with one another via a first embodiment of a 1-to-n connection;
- Fig. 4: shows top views of the contact elements being associated with a left electronic module of the inlay element of figure 3 without the electronic module and with the electronic module to be connected;
- Fig. 5: shows an enlarged view of a contact element of the left electronic module of the inlay element of figure 3;
- Fig. 6: shows top views of contact elements being associated with the left electronic module of an inlay element according to the invention without the electronic module and with the electronic module to be connected, and wherein the contact elements being associated with left electronic module are configured to be connected with contact elements being associated with a right electronic module via a second embodiment of a 1-to-n connection;
- Fig. 7: shows an enlarged view of a contact element being associated with the left electronic module of the inlay element of figure 6;
- Fig. 8: shows an enlarged view of two contact elements being associated with a first electronic module of an inlay element according to the invention that are configured to be connected with contact elements being associated with a second electronic module via a third embodiment of a 1-to-n connection.

### DESCRIPTION OF PREFERRED EMBODIMENTS

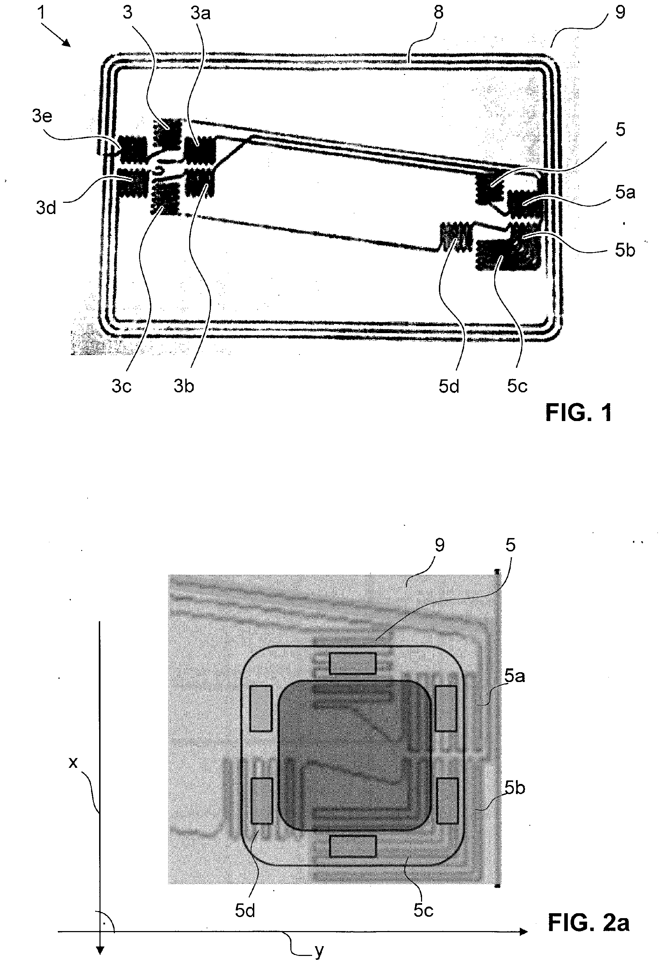

Figure 1 shows a top view on an inlay element 9 of a data carrier 1 comprising a wire connection as it is known in the art. That is, there are six contact elements 3, 3a, ... of a left electronic module (not shown) on the left side that are linked to an antenna 8 via the two contact elements 3d, 3e on the left, and wherein four contact elements 3, 3a, 3b, 3c are linked to contact elements 5, 5a, ... of a right electronic module (not shown) on the right side. Moreover, there are five contact elements 5, 5a, 5b, 5c, 5d of the right electronic module to be connected (one of the contact elements is not to be connected). The two contact elements 5b, 5c at the bottom right of this electronic module are connected together thanks to an L-shape, then linked to the upper contact element 3 of the left electronic module. This connection is a 4-to-5 pads connection, corresponding to a real use case of FPC1323 Singen V1 sensor embedding. Figure 2a depicts a zoom on the L-shape that illustrates the connection paths between the 2 contact elements 5a, 5b or pads, which goes through a single wire connection to the contact element 3 on the left side of the data carrier 1.

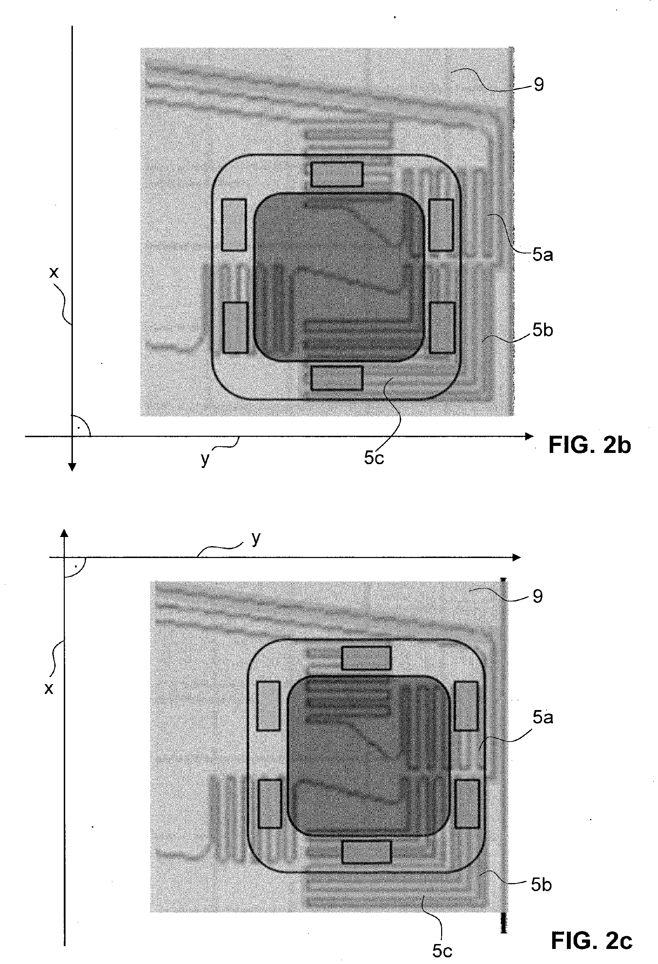

However, this solution may be not reliable if there is a shift along an x-direction or a y-direction, as illustrated with respect to figures 2b and 2c. As follows from figure 2b, a top and right shift of the wire inlay along the x- and y-directions compared to the electronic module to be placed results in only the contact element 5c at the bottom being connected. The other contact element 5b at the bottom right is not connected. As follows from figure 2c, a bottom and left shift of the wire inlay along the x and y-directions compared to the electronic module to be placed results in only the contact element 5b at the bottom right being connected. The other contact element 5c at the bottom is not connected.

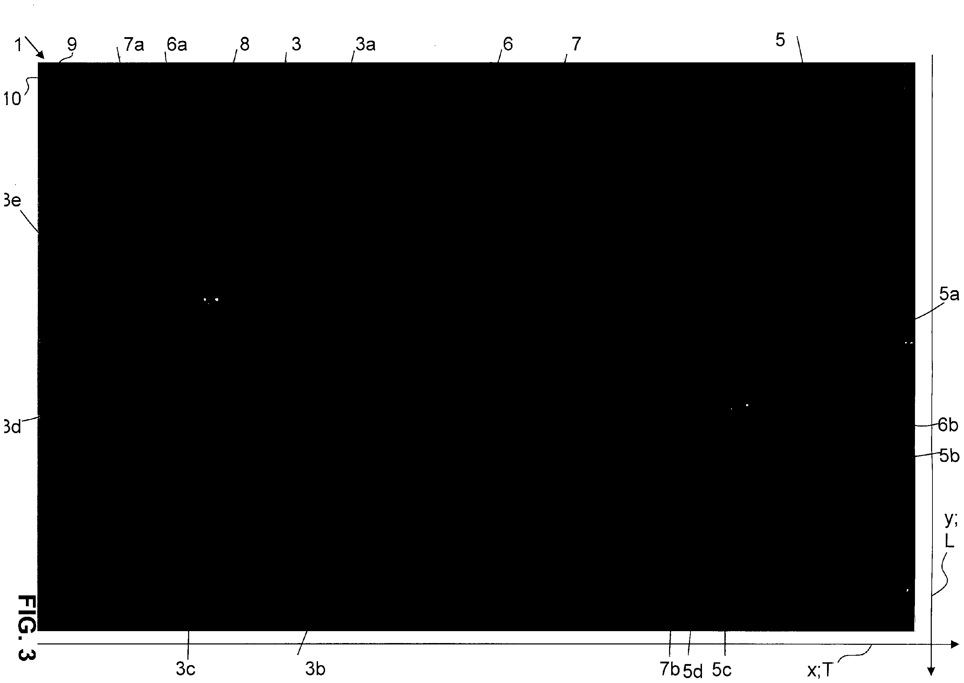

Such drawbacks of the prior art are overcome by the data carrier 1 according to the invention, aspects of which will now be discussed in greater detail with respect to figures 3 to 8.

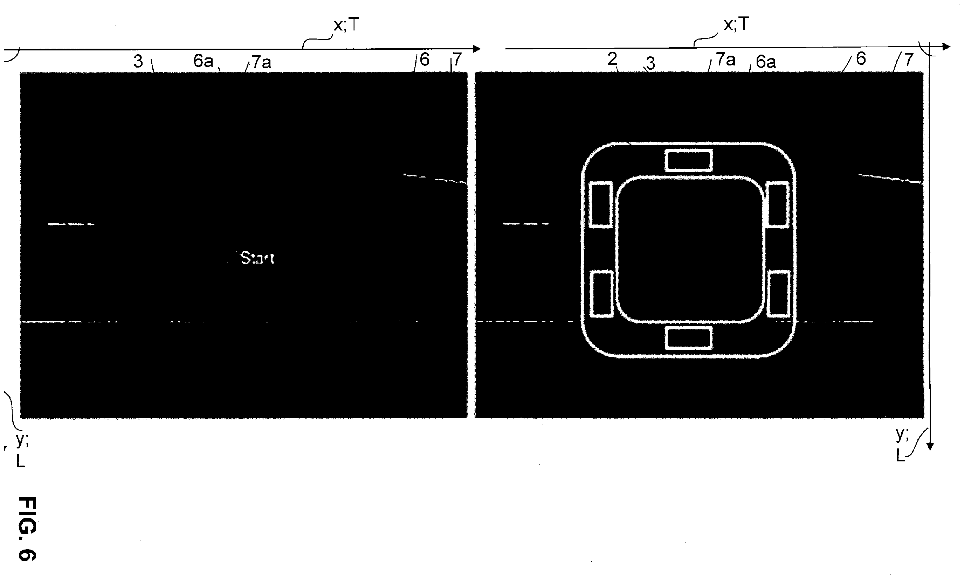

As best seen in figures 3 and 6, the data carrier 1 according to the invention comprises a first electronic module 2 being associated with first contact elements 3, 3a, ... and a second electronic module 4 (not shown) being associated with second contact elements 5, 5a, .... At least one or exactly one first contact element 3 being associated with the first electronic module 2 is in electrical connection with at least two or exactly two second contact elements 5, 5a being associated with the second electronic module 4. That is, in the present invention there is not a "one-to-one" connection between at least some of the contact elements of the electronic modules with one another but there is at least one "one-to-n" connection between the contact elements 3, 5, 5a of the electronic modules 2, 4.

As follows from figure 3, the data carrier 1 comprises an antenna 8 being in connection with the first electronic module 2 and the second electronic module 4. The antenna 8 entirely surrounds the contact elements 3, 3a, ..., 5, 5a, ... and the first and second electronic modules 2, 4 when seen in cross-section. The antenna 8 is composed of turns and is made from an electrically conductive wire arranged in the inlay element 9.

As further follows from figure 3, one of the first contact elements 3e provides an end region of the antenna 8 that serves the purpose of interconnecting the antenna 8 to the first electronic module 2. Said first contact element 3e and thus the end region has a zigzag-shape as it is commonly known in the art. In the depicted examples the electrical connection between the contact elements 3, 3a, ... is established via an electrically conducting element 6 in the form of an electrically conducting wire such as a copper wire.

Figure 3 depicts an example of a data carrier 1 according to the invention which differs from the data carrier 1 depicted in figures 1 to 2c in that it comprises six first contact elements 3-3e associated with the first electronic module 2 on the left side of the data carrier 1, wherein two of which are linked to the antenna 8 (here the 2 first contact elements 3d, 3e on the left), and four 3, 3a, 3b, 3c of which are linked to the second electronic module 4 on the right side of the data carrier 1. Moreover, there are five contact elements 5-5d to be connected that are associated with the second electronic module 4 on the right side of the data carrier 1. The two connection elements 5b, 5c associated with the second electronic module 4 at the bottom right of the data carrier 1 are split, then are both connected to the upper contact element 3 associated with the first electronic module 2 via a so-called interlooped scheme.

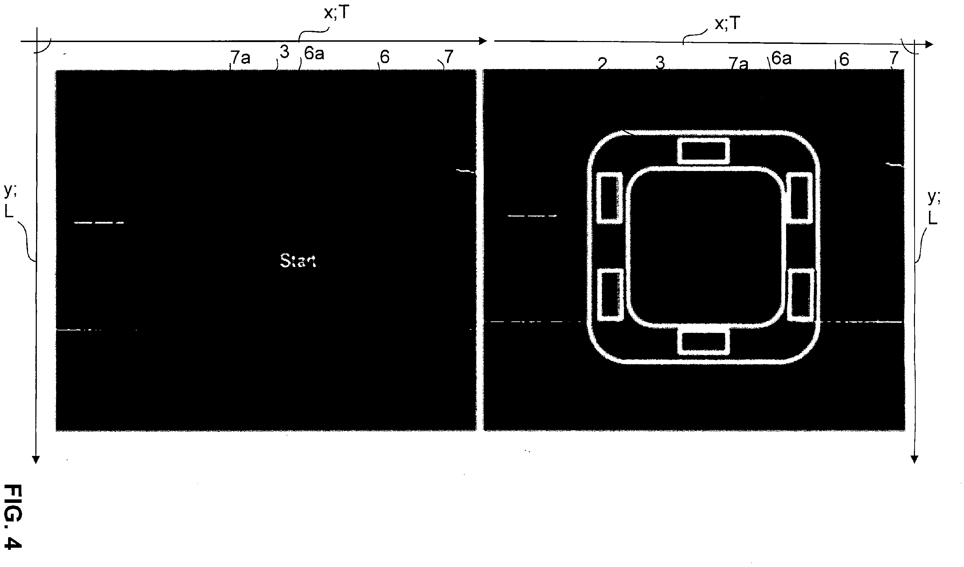

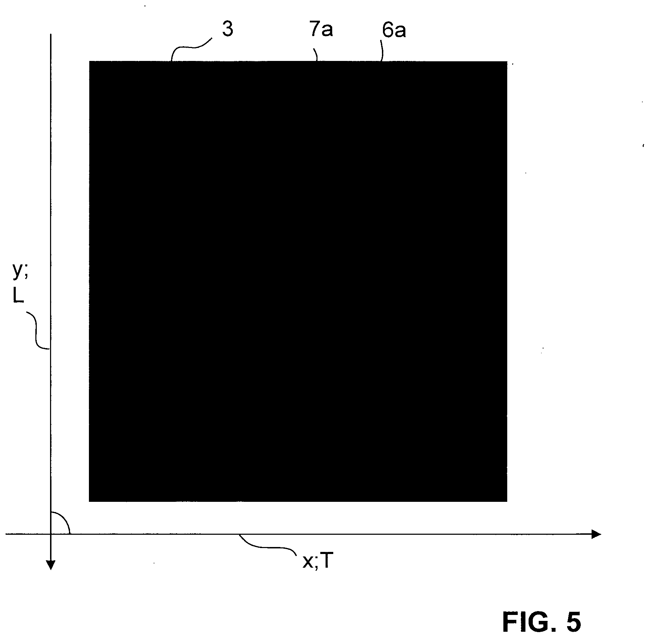

That is, and as furthermore follows from figures 4 and 5, the first contact element 3 and the second contact elements 5b, 5c are in electrical connection with one another via exactly two electrically conducting elements in the form of wires 6, 7. The first contact element 3 is formed from a first end region 6a of one of the wires 6 and from a first end region 7a of the other wire 7, and wherein the first end regions 6a, 7a are interlaced with respect to a longitudinal direction L of the first contact element 3. In this interlopped scheme, the first end regions 6a, 7a of the wires 6, 7 have an identical shape, commonly referred to as zigzag shape. Moreover, an extension of the first end regions 6a, 7a along a transversal direction (T) running perpendicularly to the longitudinal direction L is in each case the same and remains constant when seen along the longitudinal direction L of the first contact element 3. The zigzag-shape is provided by loops of the first end region 6a extending along the longitudinal direction L of the first contact element 3 and interlaced loops of the other first end region 7a extending along the longitudinal direction L of the first contact element 3. These loops are lined up in a same direction. As furthermore follows from these figures, a pitch between successive loops of the first end region 6a and a pitch between successive loops of the other first end region 7a along the longitudinal direction L remains the same and is the same. That is, the first contact element 3 comprises an overall extension along the transversal direction T when seen along the longitudinal direction L that is constant, i.e. an overall size of the first contact element 3 along the transversal direction T and when seen along the longitudinal direction L remains the same.

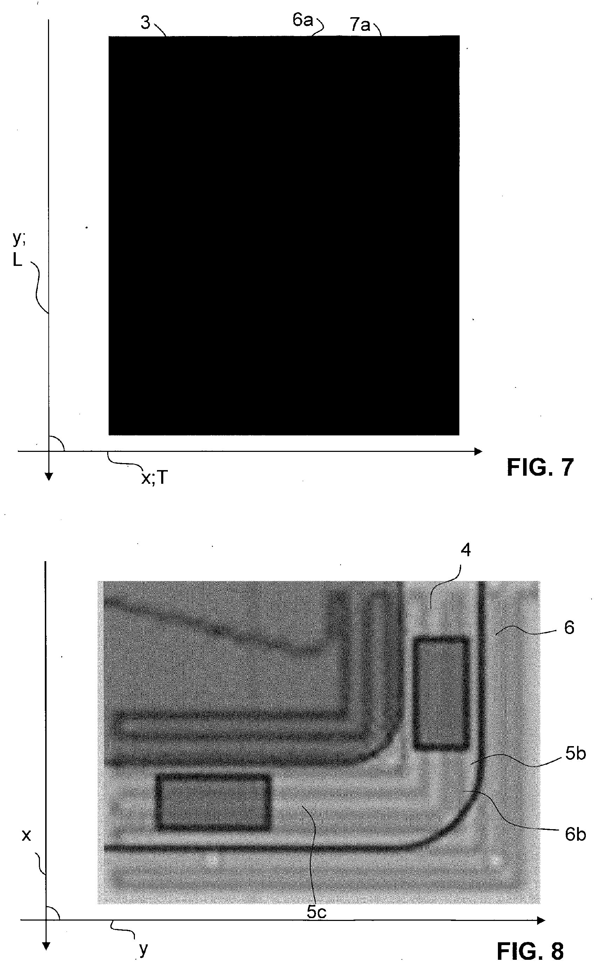

Figures 6 and 7 depict a contact element 3 of an intertwined scheme, wherein the first end regions 6a, 7a of the wires 6, 7 have different shapes. Namely, the first end regions 6a, 7a have an extension along the transversal direction T (i.e. x-direction) running perpendicularly to the longitudinal direction L of the first contact element 3 being different from one another and that varies when seen along the longitudinal direction L of the first contact element 3. These extensions can be referred to as first and second partial extensions that are alternating with respect to the longitudinal direction L of the first contact element 3. In the depicted example, they alternate in a ratio of about 30:70.

In both the interlooped and intertwined scheme the second end regions 6b, 7b of the two wires 6, 7 form individual second contact elements 5b, 5c, see figure 3. That is, the second end regions 6b, 7b are not interlaced. Moreover, these second contact elements 5b, 5c have a zigzag-shape as it is known in the art.

Figure 8 depicts contact elements 5b, 5c according to the so-called L-shape scheme, wherein a first contact element and the second contact elements 5b, 5c are in electrical connection with one another via a single wire 6. An overall shape of the second contact elements 5b, 5c, in particular the second end region 6b of the wire 6, is an L-shape. As follows from figure 8, this L-shape is not formed from two contact elements comprising in each case a zigzag-shape and wherein said zigzag-shaped contact elements are combined so as to form an overall L-shape. Rather, this L-shape is a continuous shape. That is, this L-shape is formed by loops of the second end region 6b.

**LIST OF REFERENCE SIGNS**

| | | | |
|---|---|---|---|
| 1 | data carrier | 7a | first end region |
| 2 | first electronic module | 7b | second end region |
| 3, 3a, ... | first contact elements | 8 | antenna |
| 4 | second electronic module | 9 | inlay element |
| 5, 5a, ... | second contact elements | 10 | carrier body |
| 6 | wire | | |
| 6a | first end region | L | longitudinal direction |
| 6b | second end region | T | transversal direction |
| 7 | wire | | |

## Claims

1. A data carrier (1), in particular a smart card, comprising:
- a first electronic module (2) being associated with first contact elements (3, 3a, ...),
- a second electronic module (4) being associated with second contact elements (5, 5a, ...),
**characterized in that** at least one or exactly one first contact element (3) being associated with the first electronic module (2) is in electrical connection with at least two or exactly two second contact elements (5b, 5c) being associated with the second electronic module (4).

2. The data carrier (1) according to claim 1, wherein the first contact element (3) and/or the second contact elements (5b, 5c) are formed from at least one electrically conducting element (6), in particular from an electrically conducting wire, and/or
wherein the second contact elements (5b, 5c) are arranged neighbouring on the second electronic module (4).

3. The data carrier (1) according to any one of the preceding claims, wherein the first contact element (3) and the second contact elements (5b, 5c) are in electrical connection with one another via a single electrically conducting element (6).

4. The data carrier (1) according to claim 3, wherein the first contact element (3) is formed from a first end region (6a) of the electrically conducting element (6) and the second contact elements (5b, 5c) are formed from a second end region (6b) of the electrically conducting element (6).

5. The data carrier (1) according to claim 3 or 4, wherein the first contact element (3), in particular the first end region (6a), has a zigzag shape, and/or
wherein an overall shape of the second contact elements (5b, 5c), in particular the second end region (6b), is an L-shape.

6. The data carrier (1) according to any one of claims 1 to 2, wherein the first contact element (3) and the second contact elements (5b, 5c) are in electrical connection with one another via at least two or exactly two electrically conducting elements (6, 7).

7. The data carrier (1) according to claim 6, wherein the first contact element (3) is formed from a first end region (6a) of one of the electrically conducting elements (6) and from a first end region (7a) of the other electrically conducting element (7), and
wherein the first end regions (6a, 7a) are preferably at least partially interlaced with respect to a longitudinal direction (L) of the first contact element (3).

8. The data carrier (1) according to claim 7, wherein the first end regions (6a, 7a) in each case have an identical shape and/or a zigzag shape, and/or
wherein an extension of the first end regions (6a, 7a) along a transversal direction (T) running perpendicularly to the longitudinal direction (L) is in each case the same and/or remains constant when seen along the longitudinal direction (L) of the first contact element (3).

9. The data carrier (1) according to claim 7, wherein the first end regions (6a, 7a) have different shapes, and/or
wherein the first end regions (6a, 7a) have an extension along the transversal direction (T) running perpendicularly to the longitudinal direction (L) of the first contact element (3) being different from one another and/or that varies when seen along the longitudinal direction (L) of the first contact element (3).

10. The data carrier (1) according to any one of claims 6 to 9, wherein the second end region (6b) of one of the electrically conducting elements (6) forms one of the second contact elements (5b) and the second end region (7b) of the other of the electrically conducting elements (7) forms the other of the second contact elements (5c).

11. The data carrier (1) according to any one of the preceding claims, further comprising an antenna (8), and
wherein the antenna (8) is in connection with and preferably connected to the first electronic module (2) and/or the second electronic module (4), and/or
wherein the antenna (8) at least partially and preferably entirely surrounds the first and second electronic modules (2, 4) when seen in cross-section.

12. The data carrier (1) according to any one of the preceding claims, wherein the first electronic module (2) is configured for at least one application such as a payment transaction and the second electronic module (4) is configured to enable or prohibit the application of the first electronic module (2), and
wherein the second electronic module (4) preferably is a biometric module such as a fingerprint sensor module.

13. The data carrier (1) according to any one of the preceding claims, further comprising an inlay element (9), and wherein at least one of the first electronic module (2), the second electronic module (4), the first contact elements (3, 3a, ...), the second contact elements (5, 5a, ...), the at least one electrically conducting element (6, 7) or the antenna (8) are at least partially arranged on and/or in the inlay element (9).

14. The data carrier (1) according to any one of the preceding claims, further comprising a carrier body (10) comprising one or more layers that are arranged above one another with respect to an extension direction of the data carrier (1), and
wherein at least one of the first electronic module (2), the second electronic module (4), the first contact elements (3, 3a, ...), and the second contact elements (5, 5a, ...) are at least partially and preferably entirely arranged within the carrier body (10).

15. A method of manufacturing a data carrier (1) as claimed in any one of the preceding claims, the data carrier (1) preferably being a smart card, the method comprising the steps of:
- Providing a first electronic module (2) being associated with first contact elements (3, 3a, ...),
- Providing a second electronic module (4) being associated with second contact elements (5, 5a, ...),
**characterized in that** at least one or exactly one first contact element (3) being associated with the first electronic module (2) is in electrical connection with at least two or exactly two second contact elements (5b, 5c) being associated with the second electronic module (4).
